# EUROPÄISCHE PATENTANMELDUNG

(11) **EP 2 392 781 A1**
(43) Veröffentlichungstag der Anmeldung: **07.12.2011**
(21) Anmeldenummer: 10005728.0
(22) Anmeldetag: 02.06.2010
(51) Int. Cl.: F01D 17/14, F16K 1/44, F16K 39/02

(54) **Kompaktes Stell-Schnellschluss-Ventil für eine Dampfturbine**

(71) Anmelder: Siemens Aktiengesellschaft, 80333 München (DE)
(72) Erfinder: Weltersbach, Dirk, 44805 Bochum (DE); Whitear, Daniel, 45479 Mülheim (DE)

(57) **Zusammenfassung**

Ein Stell-Schnellschluss-Ventil für eine Dampfturbine weist ein ventilgehäuse (2) auf, an dem innenseitig ein Führungstopf (3) vorsteht, dessen Achse mittig zu einem Ventilsitz (8) des Stell-Schnellschluss-Ventils (1) zeigt und in dem konzentrisch sowie in die Achsrichtung unabhängig voneinander längsverschiebbar eine Stellventilbuchse (4) und ein Schnellschlussventilrohr (5) angeordnet sind, das stets über seinen Umfang dampfdicht an der Innenseite des Führungstopfs (3) anliegt, so dass beim stirnseitigen Anliegen des Schnellschlussventilrohrs (5) an dem Ventilsitz (8) zum Schnellschließen desselben die Stellventilbuchse (4) von dem Schnellschlussventilrohr (5) und dem Führungstopf (3) hermetisch isoliert ist.

## Beschreibung

Die Erfindung betrifft ein Stell-Schnellschluss-Ventil für eine Dampfturbine, wobei das Stell-Schnellschluss-ventil ein Stellventil und ein Schnellschlussventil aufweiset, die an ein und demselben Ventilsitz des Stell-Schnellachluss-Ventils wirken.

An einer Dampfturbine, die beispielsweise in einem Dampfkraftwerk eingesetzt ist, sind für den sicheren Betrieb der Dampfturbine frischdampfseitig eine Absperrung durch ein Schnellschlussventil und zur Regelung der Frischdampfzufuhr zu der Dampfturbine ein Stellventil vorgesehen. Das Stellventil und das Schnellschlussventil sind jeweils in ein separates Ventilgehäuse eingebaut und aus Sicherheitsgründen ist die Schnellschlussfähigkeit durch das Stellventil und das Schnellschluesventil redundant bereitgestellt. Das Stellentil und das schnellschlussventil weisen jeweils eigene Antriebsaggregate auf, die im Störfall das Schnellschließen der Ventile herbeiführen. Herkömmlich sind das Schnellschlussventil und das Stellventil als in Reihe geschaltete Hubventile ausgeführt, wobei eines der Hubventile die Schnellschlussfunktion ausübt und mit dem anderen Hubventil die Frischdampfmassenstromregelung bewerkstelligt wird. Die Hubventile sind beispielsweise als Einsitzventile gebaut, die wegen ihrer guten Dichtheit und ihres geringen Druckverlusts vorteilhaft sind. Allerdings sind herkömmlich die Hubventile mit einem großen und schweren Gehäuse konstruiert, woraus ein hoher Materialeinsatz resultiert. Die Folge hiervon sind ein hoher Herstellungsaufwand bei hohen Kosten, Ferner haben die herkömmlichen Hubventile einen großen Platzbedarf.

Außerdem zeichnet sich die herkömmliche Anordnung von dem Stellventil und dem Schnellschlussventil dadurch aus, dass zwei 90°-Umlenkungen des Dampfstroms zu erfolgen haben, was mit nachteiligen Druckverluaten im Frischdampfstrom einergeht. Um den Druckverlust im Frischdampfstrom gering zu halten, ist es bekannt, das Stellventil und das Schnellschlussventil möglichst groß auszuführen, wodurch die benetzten Oberflächen und die Strömungspfade in den Ventilen hinsichtlich der Minimierung der Druckverluste optimiert sind. Jedoch führt diese Maßnahme wiederum zu sehr großen und kostenaufwändigen Ventilen, in denen große Strömungsquerschnitte vorliegen, für die vergleichsweise lange Beruhigungsstrecken zur Vermeidung von Strömungsablösung vorgesehen sind, womit hohe Materialkosten und ein großer Platzbedarf in dem Dampfkraftwerk einhergehen.

Aufgabe der Erfindung ist es ein Stell-Schnellschluss-Ventil für eine Dampfturbine zu schaffen, wobei das Stell-Schnellschluss-Ventil eine kompakte und materialeinsparende sowie eine kostengünstige Konstruktion hat.

Das erfindungsgemäße Stell-Schnellschluss-Ventil für eine Dampfturbine weist ein Ventilgehäuse auf, an dem innenseitig ein Führungstopf vorsteht, dessen Achse mittig zu einem Ventilsitz des Stell-Schnellschluss-Ventils zeigt und in dem konzentrisch sowie in die Achsrichtung unabhängig voneinander längsverschiebbar eine Stellventilbuchae und ein Schnellschlussventilrohr angeordnet sind, das stets über seinen Umfang dampfdicht an der Innenseite des Führungstopfs anliegt, so dass beim stirnseitigen Anliegen des Schnellschlussventilrohrs an dem Ventilsitz zum Schnellschließen desselben die Stellventilbuchse von dem Schnellschlussventilrohr und dem Führungstopf hermetisch isoliert ist. Dadurch, dass das Schnellschlussventilrohr über seinen Umfang stets dampfdicht an der Innenseite des Führungstopfs anliegt, ist beim Schnellschließen des Schnellschlussventilrohrs, d.h. beim stirnseitigen Anliegen des Schnellachlussventilrohrs an dem Ventilsitz, ein von dem Ventilsitz, dem Schnellschlussventilrohr und dem Führungstopt ein hermetisch isolierter Raum geschaffen, in dem die Stellventilbuchse angeordnet ist. Dadurch ist beim Schnellschluss die Stellventilbuchse lediglich den Druckverhältnissen innerhalb der Dampfturbine ausgesetzt, wodurch die Stellventilbuchse leicht und ohne Überwindung von etwaigen Druckunterschieden in diesem Raum bewegbar ist. Diese Bewegbarkeit ist baulich nicht von dem Schnellschlussventilrohr eingeschränkt, da das Schnellschlussventilrohr rohrförmig und somit ohne stirnseitige Begrenzung ausgebildet ist, die gegebenenfalls der Stellventilbuchse im Weg stehen würde. Dadurch ist beim erfindungsgemäßen Stell-Schnellschluss-Ventil für die Stellventilbuchse vorteilhaft ein großer Hub bei druckfreier Bewegung im Schnellschluss erzielt, wobei das Stell-Schnellschluss-Ventil eine kompakte und materialeinsparende sowie kostengünstige Konstruktion hat.

Das Schnellschlussventilrohr (5) ist bevorzugt zwischen der Stellventilbuchse (4) und dem Führungstopf (3) angeordnet, oder alternativ bevorzugt ist der Führungstopf (3) zwischen dem Schnellschlussventilrohr (5) und der Stellventilbuchse (4) angeordnet. Ferner ist es bevorzugt, dass zwischen dem Stell-Schnellschluss-Ventilrohr und dem Führungstopf ein Schnellschlussventilkolbenring vorgesehen ist, mit dem das dampfdichte Anliegen des Schnellschlussventilrohrs an der Innenseite des Führungstopfs bewerkstelligt ist. Dadurch ist vorteilhaft eine gute Abdichtwirkung zwischen dem Schnellschluzuventilrohr und dem Führungstopf geschaffen, wobei die Dichtwirkung des Kolbenrings durch die Bewegung des Schnellschlussventilrohrs relativ zu dem Führungskopf nur unmaßgeblich beeinträchtigt ist. Ebenfalls bevorzugt ist es, dass zwischen dem Schnellschlussventilrohr und der Stellventilbuchse ein Stellventilkolbenring vorgesehen ist, mit dem ein dampfdichtes Anliegen der Stellventilbuchse an dem Schnellschlussventilrohr bewerkstelligt ist.

An der dem Ventilsitz abgewandten Stirnseite des Schnellschlussventilrohrs ist bevorzugt mindestens eine Umfangsspindel, insbesondere drei über den Umfang verteilte Umfangsspindeln, angeordnet, wobei die mindestens eine Umfangsspindel an der dem Ventilsitz abgewandten Stirnseite des Schnellschlussventilrohrs angreift und durch eine Spindeldurchführung in dem ventilgehäuse sich erstreckt, wodurch von außerhalb des Ventilgehäuses das Schnellschlussventilrohr betätigbar ist. Somit ist vorteilhaft von außerhalb des Ventilgehäuses das Schnellschlussventilrohr betätigbar, ohne dass sowohl das schaffen des hermetisch abgedichteten Raums für die Stellventilbuchse noch die Beweglichkeit der Stellventilbuchse von dem Schnellschlussventilrohr und dessen Betätigung beeinträchtigt ist. Die Regelventilbuchse weist bevorzugt an ihrer dem Ventilsitz abgewandten Stirnseite einen Boden auf, an dem eine Zentralspindel angreift, die durch eine Spindeldurchführung in dem Ventilgehäuse sich erstreckt, wodurch von außerhalb des Ventilgehäuses die Stellventilbuchse betätigbar ist. Dadurch sind vorteilhaft von außerhalb des Ventilgehäuses völlig unabhängig voneinander die Stellventilbuchse und das Schnellschlussventilrohr betätigbar, Ferner ist es bevorzugt, dass in dem Stellventilbuchaenboden mindestens ein Druckausgleichsloch vorgesehen ist. Mit Hilfe des mindestens einen Druckausgleichslochs in dem Stellvantilbuchsenboden ist vorteilhaft die Stellventilbuchse in dem vom Schnellschlussventilrohr und vom Führungstopf begrenzten Raum drucklos bewegbar.

Bevorzugtermaßen sind eine Mehrzahl an den Umfangspindeln vorgesehen, die über den Umfang verteilt um die Zentralspindel angeordnet. Ferner ist es bevorzugt, dass zum Antreiben der Umfangsspindeln ein Schnellschlussventilantrieb und zum Antreiben der Zentralspindel ein Stellventilantrieb vorgesehen sind, wobei der Schnellschlussventilantrieb zumindest teilweise um den Stellventilantrieb angeordnet ist. Dadurch ist vorteilhaft eine kompakte Konstruktion des Stell-Schnellschluss-Ventils erreicht, wobei Antriebskräfte von dem Schnellschlussventilantrieb und dem Stellventilantrieb symmetrisch um die Achse des Führungstopfs wirken. Dadurch ist es vorteilhaft unterbunden, dass beim Antreiben des Schnellschlussventilrohrs und der Stellventilbuchse Momente von der Struktur des Stell-Schnellschluss-Ventils aufzunehmen sind. Zwischen dem Führungstopf und dem Schnellschlussventilrohr ist bevorzugt mindestens eine Schnellschlussventilführungsschiene vorgesehen, mit der das Schnellschlussventilrohr in den Führungstopf parallel zur Achse des Führungstopfs längsgeführt ist. Außerdem ist es bevorzugt, dass zwischen dem Schnellschlusaventilrohr und der Stellventilbuchse mindestens eine Stellventilführungsschiene vorgesehen ist, mit der das Stellventilrohr in dem Schnellschlussventilrohr parallel zur Achse des Führungstopfs längsgeführt ist. Dadurch sind vorteilhaft das Schnellschlussventilrohr und das Stellventilrohr hinsichtlich ihrer Längsführung in dem Führungstopfs gelagert, wodurch ein etwaiges Verklemmen des Schnellschlussventilrohrs bzw. der Stellventilbuchse unterbunden ist.

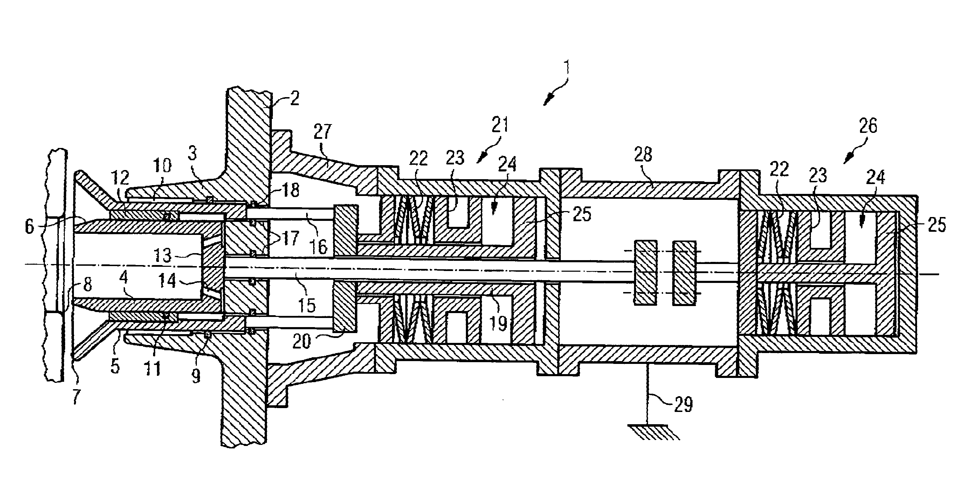

Im Folgenden wird eine bevorzugte Ausführungsform des erfindungsgemäßen Stell-Schnellschluss-Ventils anhand der beigefügten schematischen Zeichnung erläutert. Es zeigt die Figur einen Längsschnitt der Ausführungsform des erfindungsgemäßen Stell-Schnellachluss-Ventils.

Wie es aus der Figur ersichtlich ist, weist ein Stell-Schnellschluss-Ventil 1 ein Ventilgehäuse mit einer Ventilgehäusewand 2 auf, an der ein Führungstopf 3 in den Innenraum des Ventilgehäuses vorsteht. Der Führungstopf 3 ist als ein Kegelstumpf ausgebildet, der mit seiner Grundseite an der Ventilgehäusewand 2 angebracht ist. Der Kegelstumpf weist ein zylindrisches Innensackloch auf, dessen Achse mit der Achse des Kegelstumpfs zusammenfällt, wobei von dem Kegelstumpf mit dem Innensackloch und der Ventilgehäusewand 2 der Führungstopf 3 gebildet ist.

In dem Führungstopf 3 ist eine Stellventilbuchse 4 und ein Schnellschlussventilrohr 5 angeordnet, wobei die Achse der Stellventilbuchse 4 und die Achse des Schnellaehlussventilrohrs 5 mit der Achse des Führungstopfs 3 zusammenfallen und das Schnellschlussventilrohr 5 zwischen der Stellventilbuchse 4 und dem Führungstopf 3 angeordnet ist, so dass die Stellventilbuchse 4, das Schnellechlusaventilrohr 5 und der Führungstopf 3 konzentrisch zueinander angeordnet sind. Ferner sind das Schnellschlussventilrohr 5 und die Stellventilbuchse 4 in dem Führungstopf parallel zu ihren Achsen verschiebbar.

Die Stellventilbuchse 4 weist an ihrer der Ventilgehäusewand 2 abgewandten Stirnseite einen Stellventilkopf 6 und das Schnellschlussventilrohr 5 weist an ihrer der Ventilgehäusewand 2 abgewandten Stirnseite einen Schnellschlussventilkopf 7 auf, wobei der Stellventilkopf 6 und der Schnellschlussventilkopf 7 mit einem Ventilsitz 8 des Stell-Schnellschluss-Ventils 1 zusammenwirken. Der ventilsitz 8 ist axialsymmetrisch um die Achse des Führungstopfs 3 ausgebildet, so dass, wenn das Schnellschlussventilrohr 5 mit seinem Schnellschlussventilkopf 7 und/oder die Stellventilbuchse 4 mit ihrem Stellventilkopf 6 auf dem Ventilsitz 9 liegen, das Stell-Schnellschluss-Ventil 1 geschlossen ist.

Der Stellventilkopf 6 ist mit einem in Richtung zum Ventilsitz 8 hin sich verjüngenden Konus ausgestattet, so dass der Stellventilkopf 6 mit dem Ventilsitz 8 derart zusammenwirkt, dass von dem Stellventilkopf 6 eine Stellventilfunktion bewerkstelligbar ist. Ferner ist der Schnellschlussventilkopf 7 mit einem zum Ventilsitz 8 hin nach außen sich aufweitenden Konus ausgebildet. Dadurch ist vorteilhaft erreicht, dass, wenn am Ventilsitz 8 ein Unterdruck herrscht, aufgrund der Strömungsverhältnisse um den Schnellschlussventilkopf 7 an dem Schnellschlussventilrohr 5 eine Kraft in Richtung zu dem Ventilsitz 8 angreift, wodurch das Schnellschlussventilrohr 5 in den Ventilsitz 8 gedrückt wird. Die radiale Erstreckung des Schnellschlussventilkopfs 5 geht über die Innenseite des Führungstopfs 3 hinaus, so dass die Erstreckung des Führungstopfs 3 entlang seiner Achse derart vorgesehen ist, dass beim Betrieb des Stell-Schnellschluss-Ventils 1 eine Kollision zwischen dem Schnellschlussventilkopf 7 und dem Führungstopf 3 unterbunden ist.

Zwischen dem Schnellschlussventilrohr 5 und dem Führungstopf 3 ist mindestens ein Schnellechlussventilkolbenring 9 angeordnet, der eingerichtet ist, den Innenraum des Schnellschlussventilrohrs 5 bzw. des Führungstopfs 3 hermetisch zu isolieren. Der Schnellschlussventilkolbenring 9 ist derart eingerichtet, dass das hermetische Isolieren in jeder denkbaren Stellung des Schnellschlussventilrohrs 5 und während der Bewegung des Schnellschlussventilrohrs 5 gegeben ist. Zum Führen des Schnellschlussventilrohrs 5 bei dessen Axialbewegung in dem Führungstopf 3 ist zwischen dem Führungstopf 3 und dem Schnellschlussventilrohr 5 eine Schnellschlussventilführungsschiene 10 vorgesehen. Zwischen der Stellventilbuchse 4 und dem Schnellschlussventilrohr 5 ist ein Stellventilkolbenring 11 vorgesehen, so dass die Stellventilbuchse 4 ebenfalls hermetisch dicht an der Innenseite des Schnellschlussventilrohrs 5 anliegt. Ebenfalls zwischen der Stellventilbuchse 4 und dem Schnellschlussventilrohr 5 ist eine Stellventilführungsschiene 12 zum Axialführen der Stellventilbuchse 4 in dem Schnellschlussventilrohr 5 angebracht.

An der dem Ventilsitz 8 abgewandten Stirnseite der Stellventilbuchse 4 weist diese einen Stellventilbuchsenboden 13 auf, der über den Umfang verteilt mit einer Mehrzahl an Druckausgleichslöcher 14 ausgestattet ist. Mit den Druckausgleichslöchern 14 ist ein druckloses Verschieben der Stellventilbuchse 4 in dem Schnellschlussventilrohr 5 ermöglicht. An dem Stellventilbuchsenboden 13 greift eine Zentralspindel 15 an, dessen Achse mit der Achse der Stellventilbuchse 4 zusammenfällt. An der dem Ventilsitz 8 abgewandten Stirnseite des Schnellschlussventilrohrs 5 ist eine Mehrzahl an Umfangsspindeln 16 angebracht, die konzentrisch um die Zentralspindel 15 angeordnet sind. Für die Zentralspindel 15 und die Umfangsspindeln 16 sind in der Ventilgehäusewand 2 entsprechend Spindeidurchführungen 17 vorgesehen, so dass die Zentralspindel 15 und die Umfangsspindeln 16 durch die Ventilgehäusewand 2 hindurch sich erstrecken. In den Spindeldurchführungen 17 sind Durchführungsdichtungen 18 vorgesehen, mit denen der Innenraum des Führungatopfs 3 nach außen hermetisch abgedichtet ist. An die Umfangsspindeln 16 ist eine Rohrspindel 19 mit einer Kupplungsplatte 20 gekuppelt, wobei die Zentralspindel 15 sowohl durch die Kupplungsplatte 20 hindurch als auch durch die Rohrspindel 19 hindurch konzentrisch verläuft.

An der Rohrspindel 19 greift ein Schnellschlussventilantrieb 21 an, der ein Tellerfederpaket 22 aufweist, das an einem Abstützvorsprung 23 abgestützt ist. Von dem Abstützvorsprung 23 ist eine Hydraulikkammer 24 begrenzt, die ihrerseits von einem Zylinder 25 begrenzt ist, der an der Rohrspindel 19 befestigt ist. Wird in die Hydraulikkammer Hydraulikfluid gefüllt, so wirkt dieses entgegen der Federkraft des Tellerfederpakets 22, wodurch das Schnellschlussventilrohr 5 weg von dem Ventilsitz 8 via die Rohrspindel 19, die Kupplungsplatte 20 und die Umfangsspindeln 16 in eine Offenstellung bewegt wird.

In analoger Bauart zu dem Schnellschlussventilantrieb 21 ist ein Stellventilantrieb 26 vorgesehen, der an der Zentralspindel 25 angreift. Beim Bewegen der Zentralspindel 15 von dem Stellventilantrieb 26 wird die Zentralspindel 15 in der Rohrspindel 19 längsbewegt, wobei in der Rohrspindel 19 die Zentralspindel 15 längsgeführt ist. Der Schnellschlussventilantrieb 21 ist in einer ersten Säule 27 und der Stellventilantrieb 26 ist einer zweiten Säule 28 eingebaut. Beide Säulen 27, 28 sind hintereinanderliegend an die Ventilgehäusewand 2 angebaut, wobei die Zentralspindel 15 konzentrisch innerhalb der Rohrspindel 19 verläuft. Zum stabilen Abstützen der ersten Säule 27 und der zweiten Säule 28 ist an der zweiten Säule 28 eine Verankerung 29 vorgesehen, die an einem Fundament festgelegt ist.

Alternativ ist es denkbar radial zwischen dem Schnelluchlussrohr 5 und der Stellventilbuchse 4 den Führungstopf 3 vorzusehen, der dann sowohl an seiner Innenseite als auch an seiner Außenseite zylindrisch geformt ist, wodurch für das Schnellschlussventilrohr 5 von dem Führungstopf 3 an dessen Außenseite eine nicht bewegte Führungsfläche bereitgestellt ist. Dadurch sind die Stellventilbuchse 4 und das Schnellschlussventilrohr 5 unabhängig voneinander an dem Führungstopf 3 geführt. Somit ist es unterbunden, dass das Schnellschlussventilrohr 5 und die Stellventilbuchse 4 sich gegenseitig verklemmen können. Ferner ist bei dieser alternativen Ausführungsform die Schnellschlusssicherheit des Stellschnellschlussventils 1 weiter abgesichert.

## Patentansprüche

1. Stell-Schnellschluss-Ventil für eine Dampfturbine, mit einem ventilgehäuse (2), an dem innenseitig ein Führungstopf (3) vorsteht, dessen Achse mittig zu einem Ventilsitz (8) des Stell-Schnellschluss-Ventils (1) zeigt und in dem konzentrisch sowie in die Achsrichtung unabhängig voneinander längsverschieblaar eine Stellventilbuchse (4) und ein Schnellschlussventilrohr (5) angeordnet sind, das stets über seinen Umfang dampfdicht an der Innenseite des Führungstopfs (3) anliegt,
so dass beim stirnseitigen Anliegen des Schnellschlussventilrohrs (5) an dem Ventilsitz (8) zum Schnellschließen desselben die Stellventilbuchse (4) von dem Schnellschlussventilrohr (5) und dem Führungstopf (3) hermetisch isoliert ist.

2. Stell-Schnellschluss-Ventil gemäß Anspruch 1,
wobei das Schnellschlussventilrohr (5) zwischen der Stellventilbuchse (4) und dem Führungstopf (3) oder der Führungstopf (3) zwischen dem Schnellschlussventilrohr (5) und der Stellventilbuchse (4) angeordnet ist.

3. Stell-Schnellsehluss-Ventil gemäß Anspruch 1 oder 2, wobei zwischen dem Schnellschlussventilrohr (5) und dem Pührungstopf (3) ein Schnellschlussvelltilkolbenring (9) vorgesehen ist, mit dem das dampfdichte Anliegen des Schnellschlussventilrohrs (5) an der Innenseite des Führungstopfs (3) bewerkstelligt ist.

4. Stell-Schnellschluss-Ventil gemäß einem der Ansprüche 1 bis 3,
wobei zwischen dem Schnellschlussventilrohr (5) und der Stellventilbuchse (4) ein Stellventilkolbenring (11) vorgesehen ist, mit dem ein dampfdichtes Anliegen der Stellventilbuchse (4) an dem Schnellschlussventilrohr (5) bewerkstelligt ist.

5. Stell-Schnellschluss-Ventil gemäß einem der Ansprüche 1 bis 4,
wobei an der dem Ventilsitz (8) abgewandten Stirnseite des Schnellschlussventilrohrs (5) mindestens eine Umfangsspindel (16) angreift, die durch eine Spindeldurchführung (17) in dem ventilgehäuse (2) sich erstreckt, wodurch von außerhalb des Ventilgehäuses (2) das Schnellschlussventilrohr (5) betätigbar ist.

6. Stell-Schnellschluss-Ventil gemäß Anspruch 5,
wobei die Stellventilbuchse (4) an ihrer dem Ventilsitz (8) abgewandten Stirnseite einen Boden (13) aufweist, an dem eine Zentralspindel (15) angreift, die durch eine Spindeldurchführung (17) in dem Ventilgehäuse (2) sich erstreckt, wodurch von außerhalb des Ventilgehäuses (2) die Stellventilbuchse (4) betätigbar ist.

7. Stell-Schnellschluss-Ventil gemäß Anspruch 6,
wobei in dem Stellventilbuchsenboden (13) mindestens ein Druckausgleichsloch (14) vorgesehen ist.

8. Stell-Schnellschluss-Ventil gemäß Anspruch 6 oder 7, wobei eine Mehrzahl an den Umfangsspindeln (16) vorgesehen sind, die über den Umfang verteilt um die Zentralspindel (15) angeordnet sind.

9. Stell-Schnellschluss-Ventil gemäß einem der Ansprüche 6 bis 8,
wobei zum Antreiben der Umfangsspindeln (16) ein Schnellschlussventilantrieb (21) und zum Antreiben der Zentralspindel (15) ein Stellventilantrieb (26) vorgesehen sind, wobei der Schnellschlussventilantrieb (21) zumindest teilweise um den Stellventilantrieb (26) angeordnet ist.

10. Stell-Schnellschluss-Ventil gemäß einem der Ansprüche 1 bis 9,
wobei zwischen dem Führungstopf (3) und dem Schnellschlussventilrohr (5) mindestens eine Schnellechlussventilführungsschiene (10) vorgesehen ist, mit der das Schnellschlussventilrohr (5) in dem Führungstopf (3) parallel zur Achse des Führungstopfs (3) längsgeführt ist.

11. Stell-Schnellschluss-ventil gemäß einem der Ansprüche 1 bis 10,
wobei zwischen dem Schnellschlussventilrohr (5) und der Stellventilbuchse (4) mindestens eine Stellventilführungsschiene (12) vorgesehen ist, mit der die Stellventilbuchse (4) in dem Schnellschlussventilrohr (5) parallel zur Achse des Führungstopfs (3) längsgeführt ist.
